# EUROPÄISCHE PATENTSCHRIFT

(11) **EP 1 772 377 B1**
(45) Veröffentlichungstag und Bekanntmachung des Hinweises auf die Patenterteilung: **10.09.2008**
(21) Anmeldenummer: 06019130.1
(22) Anmeldetag: 13.09.2006
(51) Int. Cl.: B65B 1/08, B65D 88/66

(54) **Vorrichtung zur Feindosierung**
Device for fine dosage
Dispositif de dosage de précision

(30) Priorität: 06.10.2005 DE 202005015744 U
(43) Veröffentlichungstag der Anmeldung: 11.04.2007
(73) Patentinhaber: m-tec mathis technik gmbh, 79395 Neuenburg (DE)
(72) Erfinder: Knöpfle, Xaver, 79395 Neuenburg (DE); Moser, Kurt, 79365 Rheinhausen (DE)
(74) Vertreter: Patent- und Rechtsanwaltssozietät Maucher, Börjes & Kollegen

(56) Entgegenhaltungen:
- DE-U1- 20 316 552
- US-A- 2 646 905

## Beschreibung

Die Erfindung betrifft eine Dosiervorrichtung zur Feindosierung von Schüttgut, die ein Auslassrohr aufweist, das insbesondere an einen das Schüttgut aufnehmenden Behälter anschließbar ist und die einen unterseitigen Auslass mit einer Auslassöffnung hat, wobei der Auslass einen Klappenverschluss mit einer verstellbaren Auslassklappe aufweist.

Unter Schüttgut werden im vorliegenden Fall insbesondere Baustoffe wie zum Beispiel Mörtel, Kleber und dergleichen, oder Trockenmischungen von Baustoffen beziehungsweise Zuschlagstoffe (Additive) für Baustoffe von Trockenmischungen, weiterhin Lebensmittel, chemische Endprodukte und dergleichen verstanden. Es handelt sich dabei im wesentlichen um granulat- oder pulverförmiges, rieselfähiges Schüttgut.

Bekannt sind Dosiervorrichtungen für Schüttgüter mit einem das Schüttgut aufnehmenden Behälter, einer unterseitigen Auslassöffnung und einem im Behälter angeordneten, die Auslassöffnung öffnenden und verschließenden Dosierkörper. Sie dienen zur volumetrischen und gravimetrischen Dosierung von Pulvern, Granulaten sowie anderen rieselfähigen Schüttgütern.
Ein Problem bei der Dosierung von Schüttgütern ist die Verdichtung und Brückenbildung des Schüttguts durch seinen Eigendruck, insbesondere im Bereich der unterseitigen Auslassöffnung, wodurch die Riesel- und damit auch Dosierfähigkeit des Schüttguts zumindest eingeschränkt wird.

Diesem Problem wird durch die Verwendung von Dosierschnecken und/oder dem Einsatz von Auflockerungsrührwerken, gegebenenfalls in Kombination mit sogenannten Rüttel-Paddeln, die mechanisch auf den Vorratsbehälter einwirken, begegnet. Durch die Rüttelwirkung bei derartigen Vorrichtungen kann jedoch, insbesondere aufgrund der mechanischen Einwirkung im oberen Bereich des Schüttgutbehälters, eine Materialverdichtung und/oder Brückenbildung nicht verhindert werden, sondern kann im Gegenteil durch die vertikale Schubrichtung der Vibrationen im Bereich der Auslassöffnung noch gefördert werden.

Aus DE 11 79 862 A ist ein Schwingförderer für Schüttgut bekannt, bei welchem an einem Auslauf oder Auslass ein Klappenverschluss mit einer verstellbaren Auslassklappe vorgesehen ist.

Aus der DE 203 16 552 U1 ist weiterhin eine Dosiervorrichtung für rieselfähige Schüttgüter bekannt. Die Dosiervorrichtung weist einen Behälter mit einer Auslassöffnung auf, wobei in dem Behälter ein Dosierkörper zum Öffnen und Verschließen der Auslassöffnung angeordnet ist und der Behälter oder zumindest die Behälterwand im Bereich der. Auslassöffnung aus einem elastischen Material besteht, wodurch die Dichtwirkung des Dosierkörpers erhöht und die Haftung des Schüttguts an der Behälterwandung reduziert wird. Durch eine kegelförmige Ausgestaltung des Dosierkörpers wird eine teilweise Auflockerung des Schüttguts innerhalb des Behälters erreicht.

Aufgabe der vorliegenden Erfindung ist daher, eine Dosiervorrichtung der eingangs erwähnten Art zu schaffen, die eine Feindosierung von Schüttgut ermöglicht, wobei eine Verdichtung und/oder Brückenbildung des Schüttguts verhindert wird.

Zur Lösung dieser Aufgabe ist die eingangs erwähnte Vorrichtung dadurch gekennzeichnet, dass der auslassnahe Bereich des Auslassrohres eine elastische Innenschicht aufweist, die mit einem Vibrationsgeber verbunden ist, wobei auch die Auslassklappe des Klappenverschlusses die auslassnahe elastische Innenschicht aufweist oder zumindest teilweise aus einem elastischen Material besteht, dass dieses elastische Klappenteil oder die elastische Auslassklappe ebenfalls mit dem Vibrationsgeber verbunden ist und dass zur Betätigung der Auslassklappe des Klappenverschlusses ein Hubelement vorgesehen ist, das gleichzeitig als der Vibrationsgeber ausgebildet ist.

Dadurch wird eine gezielt induzierte Vibrationseinwirkung im auslassnahen Bereich bewirkt, so dass im wesentlichen nur das unmittelbar für den Dosiervorgang anstehende Schüttgut vibrationsbeaufschlagt und dadurch rieselfähig gehalten wird. In der Folge wird ein gleichmäßiger Dosierfluss und damit eine erhöhte Dosiergenauigkeit erreicht. Eine unerwünschte Verdichtung und gegebenenfalls Brückenbildung des weiter oben anstehenden Schüttguts kann vermieden werden.

Dadurch, dass die Auslassklappe des Klappenverschlusses eine elastische Innenschicht aufweist oder zumindest teilweise aus einem elastischen Material besteht und somit insgesamt diese Innenschicht bildet und dass dieses elastische Klappenteil oder die elastische Auslassklappe mit dem Vibrationsgeber verbunden ist, wird das anstehende, auf der Klappe aufliegende Schuttgut unmittelbar und dem Auslass so nah wie möglich durch die Vibrationsbeaufschlagung in Bewegung und damit riesel- und dosierfähig gehalten und kann dadurch beim Öffnen der Klappe während des Dosiervorgangs auch in geringsten Mengen, also feindosiert, austreten.

Da das die Auslassklappe des Klappenverschlusses bewegende Hubelement gleichzeitig als Vibrationsgeber ausgebildet ist, wird gleichzeitig während der Dosierhubbewegung, bei der die Klappe mehr oder weniger geöffnet wird, die Vibrationsbewegung auf die elastische Auslassklappe oder deren elastische Innenschicht übertragen. Außer einer hohen Effektivität bezüglich des Dosiervorgangs ist dadurch auch eine einfache Konstruktion und Ansteuerbarkeit sowie eine hohe Funktionssicherheit gegeben.

Günstig kann es dabei sein, wenn das als Vibrationsgeber ausgebildete Hubelement ein hydraulisches oder elektrisches oder pneumatisches Hubelement ist. Damit lassen sich Hubbewegungen und Vibrationen erzeugen.

Die elastische Innenschicht oder die elastische Auslassklappe besteht vorzugsweise aus einem elastomeren Material, insbesondere aus elastischem Natur- und/oder Synthesekautschuk, vorzugsweise Silikonkautschuk.
Einerseits ergibt sich dadurch im auslassnahen Bereich, wo die Vibrationsbewegung eingeleitet wird, eine gute Vibrationsübertragung auf das dort befindliche Schüttgut, während andererseits die Vibrations-Übertragungsstrecke innerhalb des elastischen Materials begrenzt bleibt. Der Vibrations-Wirkungsbereich bleibt somit in erwünschter Weise auf den Teil begrenzt, wo eine Vibrationsbewegung des Schüttguts tatsächlich vorgesehen ist. Selbst wenn sich die elastisch Innenschicht etwas in den Bereich des anstehenden Schüttguts erstreckt, ist dort eine reduzierte, nur geringe Vibrationsbeaufschlagung vorhanden.

Eine praktische Ausführungsform der Erfindung sieht vor, dass das Auslassrohr der Dosiervorrichtung einen Mantel aus weitgehend starrem Material, vorzugsweise Metall als Trägerkörper aufweist und dass innenseitig die elastische Schicht zumindest im auslassnahen Bereich des Trägerkörpers angeordnet ist. Dabei kann die elastische Innenschicht als Einsatzteil zum Einsetzen in den Trägerkörper ausgebildet sein. Dies hat insbesondere fertigungstechnische Vorteile.

Die Auslassklappe des Klappenverschlusses kann ein gegebenenfalls einstückiges Teil des aus elastischem Material bestehenden Einsatzteils sein.
In diesem Fall ist die Auslassklappe bereichsweise von dem übrigen Einsatzteil getrennt, so dass dort eine Austrittsöffnung gebildet ist. Die Auslassklappe des Klappenverschlusses ist dabei mit ihrem freien Bereich um eine durch ihre Klappenebene laufende Biegelinie aufklappbar.
Die aus elastischem Material bestehende Auslassklappe des Klappenverschluss kann auch bereichsweise randseitig stoffschlüssig mit dem Trägerkörper oder dem Einsatzteil verbunden sein. Auch besteht die Möglichkeit, dass die Auslassklappe ein von dem Auslassrohr beziehungsweise dem Einsatzteil getrenntes Teil ist, das nur mit einer Öffnungs- und Schließmechanik sowie einem Vibrationsgeber verbunden ist.

Zur verbesserten Führung der Auslassklappe kann der Klappenverschluss ein Scharnier oder Gelenk aufweisen, das einerseits mit dem Trägerkörper verbunden ist und andererseits an der Auslassklappe des Klappenverschlusses angreift. Die elastische Auslassklappe ist dadurch bei der Dosierbewegung stabilisiert und um eine vorgegebene Schwenkachse lagegenau verschwenkbar, so dass insbesondere auch unerwünschte Seitenbewegungen abgefangen werden können.

Zweckmäßigerweise weist die elastische Auslassklappe des Klappenverschlusses außenseitig eine Verbindungsplatte zum Koppeln mit einem Übertragungshebel für die Öffnungs- und Schließbewegung sowie die Vibrationsbewegung auf. Die Verbindungsplatte bildet dabei eine flächige Verbindung mit der elastischen Auslassklappe und stabilisiert diese. Darüber hinaus ist eine mechanisch stabile Ankoppelstelle für den Übertragungshebel gebildet.

Nach einer Ausgestaltung der Erfindung überdeckt der rohrförmige Trägerkörper im Auslassbereich außenseitig einen Teil der aus elastischem Material bestehenden Auslassklappe des Klappenverschlusses, vorzugsweise einen segmentförmigen Klappenabschnitt, der etwa einem Viertel bis der Hälfte der Gesamtfläche der Auslassklappe entspricht.
Auch dies trägt mit zu einer lagegenauen Halterung der Auslassklappe bei und somit insgesamt auch zu einer verbesserten Dosiergenauigkeit.

Die Arbeitsfrequenz des Vibrationsgebers ist zweckmäßigerweise verstellbar, insbesondere in einem Bereich von etwa 5 Hz bis 50 Hz.
In Versuchen hat sich herausgestellt, dass niedrigere Vibrationsfrequenzen bei feinerem Schüttgut vorteilhaft sind, weil dadurch ein unerwünschtes Verdichten vermieden wird. Durch die Verstellbarkeit der Vibrationsfrequenz kann eine Anpassung an unterschiedliches Schüttgut vorgenommen werden. Auch die Intensität der Vibrationen kann variabel sein, um eine noch bessere Anpassung an die Eigenschaft des zu dosierenden Schüttguts zu ermöglichen.

Eine Weiterbildung der Erfindung sieht vor, dass das unterseitig insbesondere an einen Schüttgut-Aufnahmebehälter anschließbare Auslassrohr einen schräg nach unten verlaufenden Rohrabschnitt mit Auslassöffnung aufweist und dass der untere Rohrabschnitt derart ausgebildet und angeordnet ist, dass die Projektionsfläche des sich nach oben anschließenden Auslassrohr-Abschnitts außerhalb des Auslassöffnungs-Bereichs liegt. Auch dies trägt mit dazu bei, dass eine feine Dosierung möglich ist, weil der Fülldruck nicht direkt auf dem Auslass lastet und dies auch vorteilhafte Auswirkungen auf die Konstruktion der Schließ- und Vibrationsmechanik hat.

Vor allem bei Kombination einzelner oder mehrerer der vorbeschriebenen Merkmale und Maßnahmen ergibt sich eine Dosiervorrichtung, bei welcher eine Materialverdichtung und/oder Brückenbildung der zu dosierenden Schüttgüter praktisch ausgeschlossen wird, wobei in vorteilhafter und zweckmäßiger Weise eine besonders gute Feindosierung durch das Öffnen des Klappenverschlusses bei zeitgleich induzierten Vibrationsbewegungen einer elastischen Innenschicht im auslassnahen Bereich ermöglicht wird.

Nachstehend ist ein Ausführungsbeispiel der Erfindung anhand der Zeichnungen näher beschrieben.
Es zeigt:
- Fig. 1: eine Längsschnittsansicht einer erfindungsgemäßen Dosiervorrichtung mit geschlossenem Klappenverschluss,
- Fig. 2: eine Fig. 1 entsprechende Darstellung, hier jedoch mit geöffnetem Klappenverschluss,
- Fig. 3: eine perspektivische Ansicht der Dosiervorrichtung mit einem gleichzeitig als Vibrationsgeber ausgebildeten Hubelement mit Rückstellfeder,
- Fig. 4: eine Schrägseitenansicht der in Fig. 3 gezeigten Dosiervorrichtung und
- Fig. 5: eine Dosieranlage mit mehreren Dosiervorrichtungen.

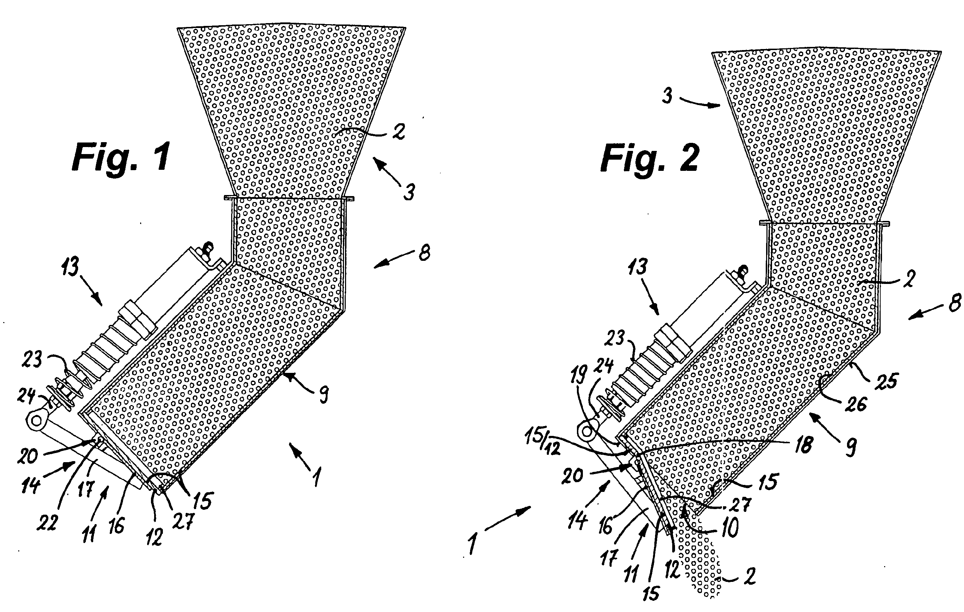

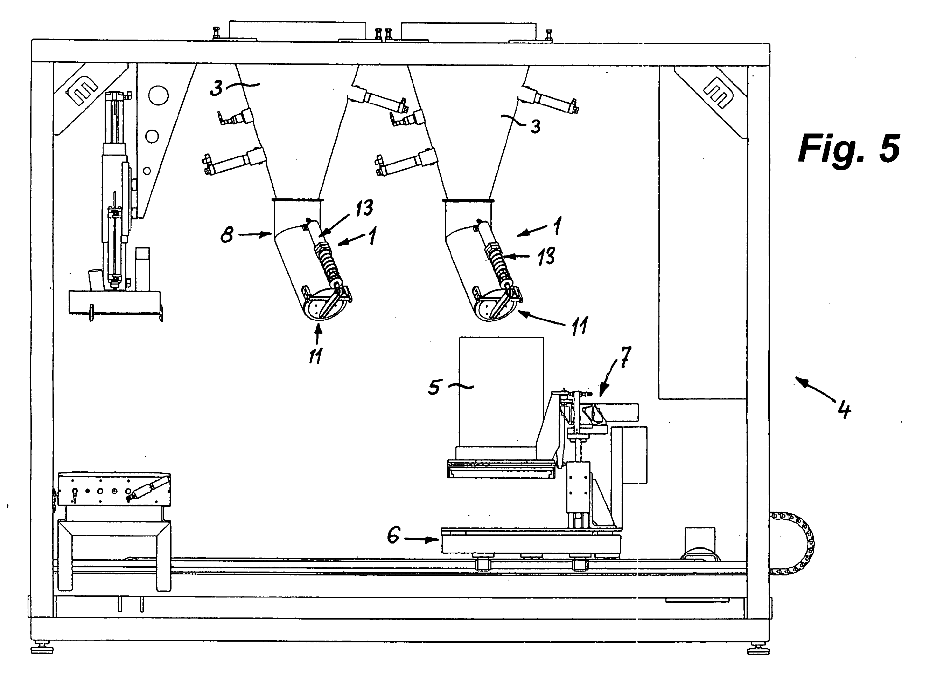

Eine in den Fig. 1 bis 4 im ganzen mit 1 bezeichnete Dosiervorrichtung dient zum Dosieren von rieselfähigem Schüttgut 2. Oberhalb der Dosiervorrichtung 1 befindet sich ein das Schüttgut 2 aufnehmender, trichterförmiger Aufnahmebehälter 3, der über eine Flanschverbindung mit der darunter befindlichen Dosiervorrichtung 1 verbindbar ist. Der trichterförmige Aufnahmebehälter 3 und die Dosiervorrichtung 1 können eine kompakte Funktionseinheit bilden.
Wie in Fig.5 erkennbar, können mehrere Dosiervorrichtungen 1 jeweils mit zugeordnetem Aufnahmebehälter 3 Teil einer Dosieranlage 4 sein, mit der unterschiedliches Schüttgut, zum Beispiel Zuschlagstoffe, dosiert in einen Behälter 5 abgegeben werden können. Der Behälter 5 befindet sich auf einem bei den einzelnen Dosiervorrichtungen 1 positionierbaren Wagen 6, an dem eine Wägeeinrichtung 7 vorgesehen ist. Die Dosiervorrichtungen 1, die Wägeeinrichtung 7 und der Positionierantrieb des Wagens 6 sind gemeinsam an eine Steuerung angeschlossen. Mit der Wägeeinrichtung 7 kann das Erreichen der jeweils gewünschten Menge an Schüttgut signalisiert und dann die einzelne Dosierung beendet werden. Die Dosieranlage 4 ermöglicht rationelle und weitgehend automatisierte Dosiervorgänge.

Die Längsschnittdarstellungen gemäß Fig. 1 und 2 lassen gut den Aufbau der erfindungsgemäßen Dosiervorrichtung 1 erkennen. Die Dosiervorrichtung 1 befindet sich, wie bereits vorerwähnt, unterhalb des mit Schüttgut 2 gefüllten Aufnahmebehälters 3.
Die Dosiervorrichtung 1 weist ein an den Aufnahmebehälter 3 angeschlossenes Auslassrohr 8 mit einem schräg nach unten verlaufenden Rohrabschnitt 9 mit einer Auslassöffnung 10 auf, wo sich ein Klappenverschluss 11 befindet, der zur dosierten Abgabe des Schüttgutes mehr oder weniger geöffnet werden kann.
Durch den abgewinkelt an den oberen Rohrabschnitt anschließenden Rohrabschnitt 9 lastet die Schüttgut-Füllstandssäule nicht direkt auf dem Klappenverschluss 11, so dass sie geringeren Druckbelastungen ausgesetzt ist, was eine Feindosierung begünstigt. Der Rohrabschnitt 9 kann zu dem in der Regel vertikalen oberen Rohrabschnitt in einem Winkel von etwa 45° verlaufen. Durch den vorgesehenen Winkel und die Länge des Rohrabschnitts 9 wird somit erreicht, dass die Projektionsfläche des sich nach oben anschließenden Auslassrohr-Abschnitts außerhalb des Auslassöffnungs-Bereichs des unteren Rohrabschnitts 9 liegt.

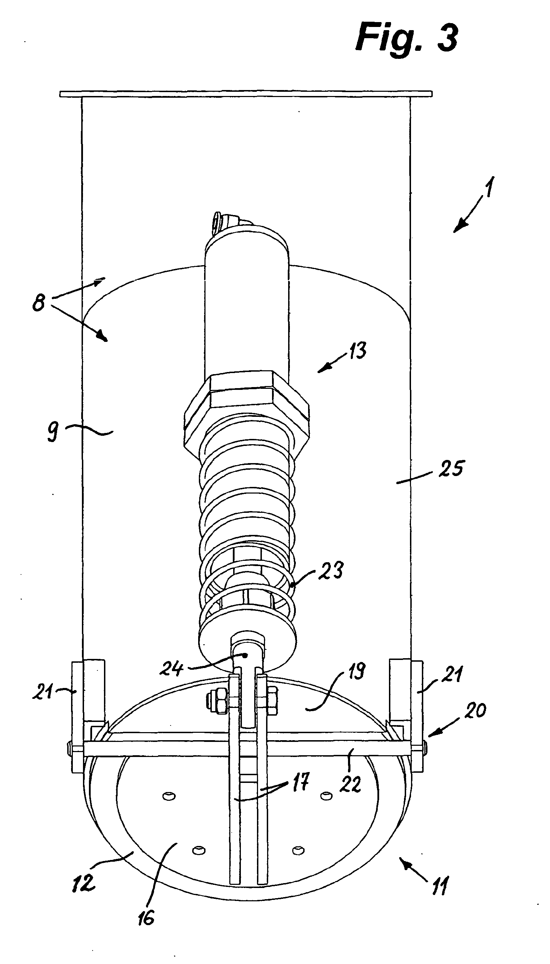

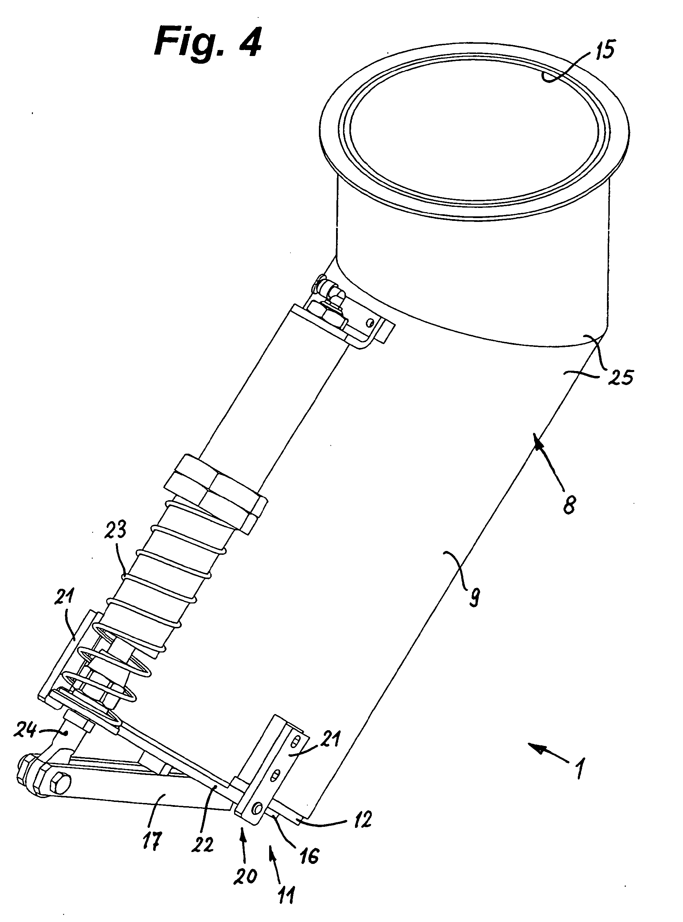

Der Auslass weist einen Klappenverschluss 11 mit einer verstellbaren Auslassklappe 12 auf. In Fig. 1 befindet sich die Auslassklappe 12 in Schließstellung, während in Fig. 2 eine Offenstellung darstellt ist. Die Öffnungs- und Schließbewegung wird von einem kombinierten Hub- und Vibrationselement 13 über eine Hebelmechanik 14 auf die Auslassklappe 12 übertragen. Die Auslassklappe 12 kann entweder eine innenseitige Beschichtung aus elastischem Material aufweisen oder aber, wie im Ausführungsbeispiel gezeigt, selbst aus solchem elastischen Material bestehen. Im Ausführungsbeispiel ist auch das Auslassrohr 8 mit einer elastischen Innenschicht 15 versehen.
Bei einer Auslassklappe 12 mit einer innenseitigen, elastischen Innenschicht 15 ist diese mit dem Hub- und Vibrationselement 13 gekoppelt und bei einer aus einer elastischen Schicht bestehenden Auslassklappe greift die Hebelmechanik 14 direkt an dieser elastischen Auslassklappe an. Dazu ist mit der elastischen Auslassklappe 12 außenseitig eine Verbindungsplatte 16 flächig, vorzugsweise durch eine Klebeverbindung, verbunden. An der Verbindungsplatte 16 greift ein vorzugsweise gabelförmiger Übertragungshebel 17 starr an (Fig. 3) .
Die Auslassklappe 12 ist um eine durch ihre Klappenebene laufende Biegelinie 18 (Fig.2) aufklappbar. Bis zu dieser Biegelinie ist sie von einem sie außenseitig übergreifenden Abschnitt 19 des Auslassrohres beziehungsweise seines unteren Rohrabschnittes 9 überdeckt. Zusätzlich ist in diesem Biegebereich der elastischen Auslassklappe ein Scharnier 20 vorgesehen, dass einerseits mit dem Rohrabschnitt 9 verbunden ist und andererseits an der Verbindungsplatte 16 angreift. Dies ist gut in den Fig. 3 und 4 erkennbar.
Das Scharnier 20 weist seitlich an dem Rand des Rohrabschnittes 9 befindliche, gegenüberliegende Haltelaschen 21 für eine Scharnier-Welle 22 auf, die mit dem beweglichen Teil der Auslassklappe 12 beziehungsweise der damit verbundenen Verbindungsplatte 16 verbunden ist. Dadurch ist die Auslass klappe 12 exakt geführt und es werden unerwünschte Verformungen durch das innenseitig aufliegende Schüttgut 2 vermieden.

Das Hub- und Vibrationselement 13 ist seitlich oberhalb des Rohrabschnittes 9, etwa parallel zu diesem verlaufend, angeordnet. Im vorliegenden Ausführungsbeispiel ist das Hub- und Vibrationselement 13 ein pneumatisches Hubelement, dass zum Öffnen und Schließen der Auslassklappe 12 über ein Proportionalventil gesteuert wird. Zusätzlich ist ein Schnellschlussventil vorgesehen, über welches das Druckgas des pneumatischen Hubelements in Vibration versetzt wird, wobei sowohl in Ruhelage bei nicht angesteuertem Proportionalventil als auch bei einer Öffnungsbewegung eine Vibrationsbewegung erzeugt beziehungsweise überlagert werden kann.
In den Figuren ist gut zu erkennen, dass das Hub- und Vibrationselement 13 eine in Schließrichtung wirkende Rückstellfeder 23 aufweist, die koaxial an dem Hubelement angebracht ist und die Auslassklappe 12 bei Ausfall des Druckmediums in Schließstellung bringt und damit ein unbeabsichtigtes Entleeren verhindert (Fail Save Funktion).
Das Hub- und Vibrationselement 13 ist mit dem Antriebsende seiner Schubstange 24 mit dem freien Ende des Übertragungshebels 17 verbunden, so dass die Hubbewegung der Schubstange 24 in eine Öffnungs- und Schließbewegung der Auslassklappe 12 umgesetzt wird.

Wie in Fig. 3 und 4 erkennbar, ist die Auslassklappe 12 des Klappenverschlusses 11 kreisförmig ausgebildet. Sie kann jedoch auch eine andere Umrissform aufweisen.

Das Auslassrohr 8 der Dosiervorrichtung 1 kann einen Außenmantel aus weitgehend starrem Material als Trägerkörper 25 aufweisen, der beispielsweise aus Metall, vorzugsweise aus Edelstahl besteht. Die elastische Innenschicht 25 kann entweder innenseitig auf den Trägerkörper, insbesondere im auslassnahen Bereich aufgebracht sein oder aber es besteht auch die Möglichkeit, dass die elastische Innenschicht 15 als Einsatzteil zum Einsetzen in den Trägerkörper 25 ausgebildet ist. Die Auslassklappe 12 des Klappenverschlusses 11 kann in diesem Fall ein vorzugsweise einstückiges Teil dieses Einsatzteiles sein. Damit ist der Klappenverschluss über das sich im Auslassrohr fortsetzende Einsatzteil 26 mit dem Auslassrohr 8 beziehungsweise dem Rohrabschnitt 9 verbunden. Es besteht aber auch die Möglichkeit, dass die Auslassklappe 12 entweder teilrandseitig mit dem Einsatzteil 26 oder aber mit dem Rohrabschnitt 9 verbunden ist oder ein separates Teil bildet, das in Schließstellung dichtend in den Rohrabschnitt 9 eingreift. Das im Bereich des Auslassrohres 8 eingreifende Einsatzteil kann zwar auch stoffschlüssig, beispielsweise durch Klebung mit dem Trägerkörper, also dem Außenrohrteil, verbunden sein, vorzugsweise ist es jedoch nur in das Trägerteil eingelegt.
Das in das Auslassrohr 8 eingreifende Einsatzteil kann eine Wanddicke von einigen Millimetern, beispielsweise etwa fünf Millimeter haben.
In den Fig. 1 und 2 ist noch innenseitig an der Auslassklappe 12 ein umlaufendes Ringteil 27 aus elastischem Material erkennbar, das vorzugsweise aus Silikon besteht und gegebenenfalls einstückig mit der elastischen Auslassklappe verbunden sein kann. Das Ringteil 27 greift in Schließstellung der Auslassklappe 12 in das Auslassrohr beziehungsweise das dort gegebenenfalls vorgesehene Einsatzteil 26 dichtend ein. In Versuchen hat sich herausgestellt, dass durch dieses Ringteil überraschenderweise eine bessere Feindosierung möglich ist. Außerdem wird dadurch eine bessere Abdichtung durch das Eingreifen in die Auslassöffnung 10 erreicht.

Die bereits vorbeschriebene Abwinklung des Auslassrohres 8 zur Reduzierung des auf der Auslassklappe 12 lastenden Schüttgutdrucks ermöglicht einen mechanisch vereinfachten, leichten Aufbau des Klappenverschlusses und auch des Hub- und Vibrationselementes, da sowohl für den Öffnungs- und Schließvorgang als auch für die Vibrationsbewegung geringere Antriebskräfte erforderlich sind. Außerdem begünstigt der leichtere Aufbau des Klappenverschlusses und seines Antriebs ein besonders feine Dosierbarkeit. Selbst bei einem Schüttgut-Aufnahmevolumen von beispielsweise 200 bis 300 Litern ist durch die erfindungsgemäßen Ausbildungen eine Dosiergenauigkeit im Eingrammbereich realisierbar.

Erwähnt sei noch, dass für den Hubantrieb zum Öffnen und Schließen der Auslassklappe 12 ein Hubelement und für das Einleiten der Vibrationsbewegung ein oder mehrere von dem Hubantrieb getrennte Vibrationsgeber vorgesehen sein können.
Für das Klappenverschluss-Hubelement kann außer einem pneumatischen Hubelement ein hydraulisches oder elektrisches Hubelement eingesetzt werden.
Auch für den Vibrationsgeber kann ein hydraulischer oder elektrischer Vibrationsgeber vorgesehen sein.

Die Dosiervorrichtung 1 zur Feindosierung von Schüttgut 2 weist ein Auslassrohr 8 auf, das insbesondere ein einen das Schüttgut 2 aufnehmenden Aufnahmebehälter 3 anschließbar ist. Dabei hat die Dosiervorrichtung 1 einen unterseitigen Auslass mit einer Auslassöffnung 10, welcher einen Klappenverschluss mit einer verstellbaren Auslassklappe 12 aufweist. Der auslassnahe Bereich hat dabei eine elastische Innenschicht 15, die mit einem Vibrationsgeber 13 verbunden ist, wobei die Auslassklappe 12 des Klappenverschlusses 11 die auslassnahe elastische Innenschicht 15 aufweist oder zumindest teilweise aus einem elastischen Material besteht, wodurch die Innenschicht also dann gebildet wird. Dieses elastische Klappenteil oder die elastische Auslassklappe ist mit dem Vibrationsgeber 13 verbunden und zur Betätigung der Auslassklappe 12 des Klappenverschlusses 11 ist ein Hubelement vorgesehen, das gleichzeitig als Vibrationsgeber 13 dient oder ausgebildet ist.

## Patentansprüche

1. Dosiervorrichtung (1) zur Feindosierung von Schüttgut (2), die ein Auslassrohr (8) aufweist, das insbesondere an einen das Schüttgut aufnehmenden Aufnahmebehälter (3) anschließbar ist und die einen unterseitigen Auslass mit einer Auslassöffnung (10) hat, wobei der Auslass einen Klappenverschluss mit einer verstellbaren Auslassklappe (12) aufweist, **dadurch gekennzeichnet, dass** der auslassnahe Bereich des Auslassrohres (8) eine elastische Innenschicht (15) aufweist, die mit einem Vibrationsgeber (13) verbunden ist, wobei auch die Auslassklappe (12) des Klappenverschlusses (11) die auslassnahe elastische Innenschicht (15) aufweist oder zumindest teilweise aus einem elastischen Material besteht, dass dieses elastische Klappenteil oder die elastische Auslassklappe ebenfalls mit dem Vibrationsgeber (13) verbunden ist und dass zur Betätigung der Auslassklappe (12) des Klappenverschlusses (11) ein Hubelement vorgesehen ist, das gleichzeitig als der Vibrationsgeber (13) ausgebildet ist.

2. Vorrichtung nach Anspruch 1, **dadurch gekennzeichnet, dass** die elastische Innenschicht (15) oder dergleichen Bauteil aus einem elastomeren Material, insbesondere aus elastischem Natur- und/oder Synthesekautschuk, vorzugsweise Silikonkautschuk, besteht.

3. Vorrichtung nach Anspruch 1 oder 2, **dadurch gekennzeichnet, dass** das als Vibrationsgeber (13) ausgebildete Hubelement ein hydraulisches oder elektrisches oder pneumatisches Hubelement ist.

4. Vorrichtung nach einem der Ansprüche 1 bis 3, **dadurch gekennzeichnet, dass** der Klappenverschluss (11) eine runde oder gerundete, insbesondere kreisförmige Auslassklappe (12) aufweist.

5. Vorrichtung nach einem der Ansprüche 2 bis 4, **dadurch gekennzeichnet, dass** die elastische Auslassklappe (12) des Klappenverschlusses (11) um eine durch ihre Klappenebene laufende Biegelinie (18) aufklappbar ist.

6. Vorrichtung nach einem der Ansprüche 1 bis 5, **dadurch gekennzeichnet, dass** das unterseitig insbesondere an einen Schüttgut-Aufnahmebehälter (3) anschließbare Auslassrohr (8) einen schräg nach unten verlaufenden Rohrabschnitt (9) mit Auslassöffnung (10) aufweist und dass der untere Rohrabschnitt (9) derart ausgebildet und angeordnet ist, dass die Projektionsfläche des sich nach oben anschließenden Auslassrohr-Abschnitts außerhalb des Auslassöffnungs-Bereichs liegt.

7. Vorrichtung nach einem der Ansprüche 1 bis 6, **dadurch gekennzeichnet, dass** das Auslassrohr (8) der Dosiervorrichtung (1) einen Außenmantel aus weitgehend starrem Material, vorzugsweise Metall als Trägerkörper (25) aufweist und dass innenseitig die elastische Schicht (15) zumindest im auslassnahen Bereich des Trägerkörpers (25), insbesondere sich in den Verschlussbereich erstreckend, angeordnet ist.

8. Vorrichtung nach Anspruch 7, **dadurch gekennzeichnet, dass** die elastische Innenschicht (15) als Einsatzteil (26) zum Einsetzen in den Trägerkörper (25) ausgebildet ist.

9. Vorrichtung nach Anspruch 8, **dadurch gekennzeichnet, dass** die Auslassklappe des Klappenverschlusses (11) ein vorzugsweise einstückiges Teil des Einsatzteils ist.

10. Vorrichtung nach einem der Ansprüche 1 bis 9, **dadurch gekennzeichnet, dass** die zumindest teilweise aus elastischem Material bestehende Auslassklappe (12) des Klappenverschlusses (11) bereichsweise randseitig stoffschlüssig mit dem Trägerkörper (25) oder dem Einsatzteil (26) verbunden ist.

11. Vorrichtung nach einem der Ansprüche 1 bis 10, **dadurch gekennzeichnet, dass** der Klappenverschluss (11) ein Scharnier oder Gelenk (20) aufweist, das einerseits mit dem Auslassrohr (8) beziehungsweise dem Trägerkörper (25) verbunden ist und andererseits an der Auslassklappe (12) des Klappenverschlusses (11) angreift.

12. Vorrichtung nach einem der Ansprüche 1 bis 11, **dadurch gekennzeichnet, dass** die elastische Auslassklappe (12) des Klappenverschlusses (11) außenseitig eine Verbindungsplatte (16) zum Koppeln mit einem Übertragungshebel (17) aufweist.

13. Vorrichtung nach Anspruch 11 oder 12, **dadurch gekennzeichnet, dass** das Scharnier oder Gelenk (20) seitlich an dem auslassseitigen Rand des Trägerkörpers (25) befindliche, gegenüberliegende Haltelaschen (21) für eine Scharnier-Welle (22) aufweist, die mit dem beweglichen Teil der Auslassklappe (12) des Klappenverschlusses (11) oder der damit verbundenen Verbindungsplatte (16) verbunden ist.

14. Vorrichtung nach einem der Ansprüche 1 bis 13, **dadurch gekennzeichnet, dass** der Vibrationsgeber und/oder das Hubelement oder das als Vibrationsgeber ausgebildete Hubelement (13) seitlich neben dem Auslassrohr (8), insbesondere neben dessen unterem Rohrabschnitt (9) angeordnet ist.

15. Vorrichtung nach einem der Ansprüche 1 bis 14, **dadurch gekennzeichnet, dass** der Vibrationsgeber und/oder das Hubelement oder das als Vibrationsgeber ausgebildete Hubelement (13) mit dem Antriebsende seiner Schubstange (24) oder dergleichen Bewegungsteil seitlich neben der Auslassklappe (12) des Klappenverschlusses (11) angeordnet ist und dass mit dem Antriebsende gelenkig der Übertragungshebel (17) verbunden ist, der mit seinem anderen Ende an der Auslassklappe (12) des Klappenverschlusses (11) angreift.

16. Vorrichtung nach einem der Ansprüche 12 bis 15, **dadurch gekennzeichnet, dass** der das Hubelement (13) und die Auslassklappe (12) des Klappenverschlusses (11) verbindende Übertragungshebel (17) mit der Auslassklappe des Klappenverschlusses (11) starr, insbesondere stoffschlüssig verbunden ist.

17. Vorrichtung nach einem der Ansprüche 6 bis 16, **dadurch gekennzeichnet, dass** das Auslassrohr (8) beziehungsweise der rohrförmige Trägerkörper (25) im Auslassbereich außenseitig einen Teil der aus elastischem Material bestehenden Auslassklappe (12) des Klappenverschlusses (11) überdeckt, vorzugsweise einen segmentförmigen Klappenabschnitt, der etwa einem Viertel bis der Hälfte der Gesamtfläche der Auslassklappe entspricht.

18. Vorrichtung nach einem der Ansprüche 1 bis 17, **dadurch gekennzeichnet, dass** die Auslassklappe des Klappenverschlusses (11) innenseitig an ihrem Außenrandbereich ein nach innen weisendes, umlaufendes Ringteil (27) aus elastischem Material, vorzugsweise aus Silikon, aufweist, der in Schließstellung der Auslassklappe (12) des Klappenverschlusses (11) in das Auslassrohr (8) eingreift.

19. Vorrichtung nach einem der Ansprüche 1 bis 19, **dadurch gekennzeichnet, dass** das zur Betätigung der Auslassklappe (12) des Klappenverschlusses (11) vorgesehene Hubelement (13) eine in Schließrichtung wirkende Rückstellfeder (23) aufweist.

20. Vorrichtung nach einem der Ansprüche 1 bis 19, **dadurch gekennzeichnet, dass** die Arbeitsfrequenz des Vibrationsgebers verstellbar ist, insbesondere in einem Bereich von etwa 5 Hz bis 50 Hz.

## Claims

1. Metering device (1) for the fine metering of bulk materials (2), comprising an outlet tube (8) which is connectable in particular to a receiving container (3) that holds the bulk material and which has an outlet at the bottom with an outlet opening (10), the outlet having a flap closure with an adjustable outlet flap (12), **characterised in that** the part of the outlet tube (8) close to the outlet has an elastic inner layer (15) which is connected to a vibrator (13), wherein the outlet flap (12) of the flap closure (11) comprises the elastic inner layer (15) close to the outlet or at least partly consists of an elastic material, **in that** this elastic flap member or the elastic outlet flap is also connected to the vibrator (13) and that a lifting element is provided for actuating the outlet flap (12) of the flap closure (11), said lifting element simultaneously being constructed as the vibrator (13).

2. Device according to claim 1, **characterised in that** the elastic inner layer (15) or similar component consists of an elastomeric material, particularly elastic natural and/or synthetic rubber, preferably silicon rubber.

3. Device according to claim 1 or 2, **characterised in that** the lifting element constructed as a vibrator (13) is a hydraulic or electric or pneumatic lifting element.

4. Device according to one of claims 1 to 3, **characterised in that** the flap closure (11) has a round or rounded, particularly circular outlet flap (12).

5. Device according to one of claims 2 to 4, **characterised in that** the elastic outlet flap (12) of the flap closure (11) is pivotable about a fold line (18) running through the plane of the flap.

6. Device according to one of claims 1 to 5, **characterised in that** the outlet tube (8) which is connectable underneath, particularly to a receiving container (3) for bulk material, comprises a tube section (9) extending diagonally downwards with an outlet opening (10), and **in that** the lower tube section (9) is constructed and arranged such that the projection surface of the outlet tube section adjoining it at the top is located outside the region of the outlet opening.

7. Device according to one of claims 1 to 6, **characterised in that** the outlet tube (8) of the metering device (1) has an outer casing of substantially rigid material, preferably metal, as the support member (25) and that on the inside the elastic layer (15) is arranged at least in the area of the support member (25) close to the outlet, particularly extending into the closure region.

8. Device according to claim 7, **characterised in that** the elastic inner layer (15) is constructed as an insert (26) for insertion in the support member (25).

9. Device according to claim 8, **characterised in that** the outlet flap of the flap closure (11) is a preferably integral part of the insert.

10. Device according to one of claims 1 to 9, **characterised in that** the outlet flap (12) of the flap closure (11), consisting at least partly of elastic material, is connected to the support member (25) or insert (26) by adhesion of materials around its edges, in some areas.

11. Device according to one of claims 1 to 10, **characterised in that** the flap closure (11) comprises a hinge or joint (20) which is connected on the one hand to the outlet tube (8) or to the support member (25) and on the other hand engages on the outlet flap (12) of the flap closure (11).

12. Device according to one of claims 1 to 11, **characterised in that** the elastic outlet flap (12) of the flap closure (11) comprises on the outside a connecting plate (16) for coupling to a transmission lever (17).

13. Device according to claim 11 or 12, **characterised in that** the hinge or joint (20) comprises opposing retaining plates (21) for a hinge spindle (22), which are located laterally on the outlet edge of the support member (25), said hinge spindle (22) being connected to the movable part of the outlet flap (12) of the flap closure (11) or the connecting plate (16) attached thereto.

14. Device according to one of claims 1 to 13, **characterised in that** the vibrator and/or the lifting element or the lifting element (13) in the form of a vibrator is arranged laterally adjacent to the outlet tube (8), particularly adjacent to the lower tube section (9) thereof.

15. Device according to one of claims 1 to 14, **characterised in that** the vibrator and/or the lifting element or the lifting element (13) constructed as a vibrator is arranged with the drive end of its push rod (24) or similar moving part laterally adjacent to the outlet flap (12) of the flap closure (11) and **in that** the transmission lever (17) is jointed to the driving end and its other end engages on the outlet flap (12) of the flap closure (11).

16. Device according to one of claims 12 to 15, **characterised in that** the transmission lever (17) that connects the lifting element (13) and the outlet flap (12) of the flap closure (11) is connected rigidly, particularly by adhesion of materials.

17. Device according to one of claims 6 to 16, **characterised in that** the outlet tube (8) or the tubular support member (25) in the outlet region externally covers a part of the outlet flap (12) of the flap closure (11) which is made of elastic material, preferably a segment-shaped flap portion which corresponds to roughly a quarter to a half of the total surface of the outlet flap.

18. Device according to one of claims 1 to 17, **characterised in that** the outlet flap of the flap closure (11) comprises on the inside, on its outer edge region, an inwardly facing encircling annular part (27) made of elastic material, preferably silicon, which engages in the outlet tube (8) in the closed position of the outlet flap (12) of the flap closure (11).

19. Device according to one of claims 1 to 19, **characterised in that** the lifting element (13) provided for actuating the outlet flap (12) of the flap closure (11) has a resetting spring (23) acting in the direction of closure.

20. Device according to one of claims 1 to 19, **characterised in that** the working frequency of the vibrator is adjustable, particularly in the range from about 5 Hz to 50 Hz.

## Revendications

1. Dispositif de dosage (1) pour le dosage fin de produit en vrac (2), qui présente un tube d'évacuation (8) qui peut être notamment raccordé à un récipient collecteur (3) recevant le produit en vrac et qui possède une évacuation inférieure avec une ouverture d'évacuation (10), sachant que l'évacuation présente une fermeture à clapet avec un clapet d'évacuation mobile (12), **caractérisé en ce que** la région du tube d'évacuation (8) qui est proche de l'évacuation présente une couche intérieure élastique (15) qui est reliée à un transmetteur de vibrations (13), sachant que le clapet d'évacuation (12) de la fermeture à clapet (11) présente également la couche intérieure élastique (15) proche de l'évacuation ou est constitué au moins partiellement d'un matériau élastique, **en ce que** cette partie de clapet élastique ou le clapet d'évacuation élastique est également relié(e) au transmetteur de vibrations (13), et **en ce qu'**il est prévu, pour l'actionnement du clapet d'évacuation (12) de la fermeture à clapet (11), un élément de levée qui est conçu en même temps comme transmetteur de vibrations (13).

2. Dispositif selon la revendication 1, **caractérisé en ce que** la couche intérieure élastique (15) ou l'élément similaire est constitué(e) d'un matériau élastomère, notamment de caoutchouc naturel et/ou synthétique, de préférence de caoutchouc de silicone.

3. Dispositif selon la revendication 1 ou 2, **caractérisé en ce que** l'élément de levée conçu comme transmetteur de vibrations (13) est un élément de levée hydraulique ou électrique ou pneumatique.

4. Dispositif selon l'une des revendications 1 à 3, **caractérisé en ce que** la fermeture à clapet (11) présente un clapet d'évacuation (12) rond ou arrondi, notamment circulaire.

5. Dispositif selon l'une des revendications 2 à 4, **caractérisé en ce que** le clapet d'évacuation élastique (12) de la fermeture à clapet (11) peut être ouvert par rabattement autour d'une ligne de flexion (18) passant par son plan de clapet.

6. Dispositif selon l'une des revendications 1 à 5, **caractérisé en ce que** le tube d'évacuation (8) dont la face inférieure peut être notamment raccordée à un récipient collecteur (3) de produit en vrac présente un tronçon de tube (9) s'étendant en oblique vers le bas qui est pourvu de l'ouverture d'évacuation (10), et **en ce que** le tronçon de tube inférieur (9) est conçu et disposé de telle sorte que la surface de projection du tronçon de tube se raccordant vers le haut se situe en dehors de la région de l'ouverture d'évacuation.

7. Dispositif selon l'une des revendications 1 à 6, **caractérisé en ce que** le tube d'évacuation (8) du dispositif de dosage (1) présente une enveloppe extérieure en matériau essentiellement rigide, de préférence en métal comme corps porteur (25), et **en ce que** la couche intérieure (15) est disposée sur le côté intérieur au moins dans la région du corps porteur (25) qui est proche de l'évacuation, notamment en s'étendant dans la région de fermeture.

8. Dispositif selon la revendication 7, **caractérisé en ce que** la couche intérieure élastique (15) est conçue comme pièce d'insertion (26) à insérer dans le corps porteur (25).

9. Dispositif selon la revendication 8, **caractérisé en ce que** le clapet d'évacuation de la fermeture à clapet (11) est un élément de préférence d'un seul tenant de la pièce d'insertion (26).

10. Dispositif selon l'une des revendications 1 à 9, **caractérisé en ce que** le clapet d'évacuation (12) de la fermeture à clapet (11), constitué au moins partiellement de matériau élastique, est sectoriellement relié sur son bord par liaison de matière au corps porteur (25) ou à la pièce d'insertion (26).

11. Dispositif selon l'une des revendications 1 à 10, **caractérisé en ce que** la fermeture à clapet (11) présente une charnière ou articulation (20) qui d'une part est reliée au tube d'évacuation (8) ou encore au corps porteur (25), et d'autre part agit sur le clapet d'évacuation (12) de la fermeture à clapet (11).

12. Dispositif selon l'une des revendications 1 à 11, **caractérisé en ce que** le clapet d'évacuation élastique (12) de la fermeture à clapet (11) présente extérieurement une plaque de liaison (16) pour l'accouplement à un levier de transmission (17).

13. Dispositif selon la revendication 11 ou 12, **caractérisé en ce que** la charnière ou articulation (20) présente latéralement des pattes de maintien opposées (21), situées sur le bord côté évacuation du corps porteur (25), pour un axe de charnière (22) qui est relié à la partie mobile du clapet d'évacuation (12) de la fermeture à clapet (11) ou à la plaque de liaison (16) reliée à ladite partie.

14. Dispositif selon l'une des revendications 1 à 13, **caractérisé en ce que** le transmetteur de vibrations et/ou l'élément de levée ou l'élément de levée (13) conçu comme transmetteur de vibrations est disposé sur le côté du tube d'évacuation (8), notamment sur le côté de son tronçon de tube inférieur (9).

15. Dispositif selon l'une des revendications 1 à 14, **caractérisé en ce que** le transmetteur de vibrations et/ou l'élément de levée ou l'élément de levée (13) conçu comme transmetteur de vibrations est disposé par l'extrémité d'entraînement de sa bielle (24) ou élément mobile analogue sur le côté du clapet d'évacuation (12) de la fermeture à clapet (11), et **en ce que** le levier de transmission (17) est relié de manière articulée à l'extrémité d'entraînement, l'autre extrémité dudit levier agissant sur le clapet d'évacuation (12) de la fermeture à clapet (11).

16. Dispositif selon l'une des revendications 12 à 15, **caractérisé en ce que** le levier de transmission (17) reliant l'élément de levée (13) et le clapet d'évacuation (12) de la fermeture à clapet (11) est relié rigidement au clapet d'évacuation de la fermeture à clapet (11), notamment par liaison de matière.

17. Dispositif selon l'une des revendications 6 à 16, **caractérisé en ce que** le tube d'évacuation (8) ou encore le corps porteur tubulaire (25) recouvre extérieurement, dans la région d'évacuation, une partie du clapet d'évacuation (12) de la fermeture à clapet (11) constitué de matériau élastique, de préférence une portion de clapet en forme de segment qui correspond à environ un quart à la moitié de la surface totale du clapet d'évacuation.

18. Dispositif selon l'une des revendications 1 à 17, **caractérisé en ce que** le clapet d'évacuation de la fermeture à clapet (11) présente intérieurement, sur sa région de bord extérieur, une partie annulaire entourante (27) dirigée vers l'intérieur, en matériau élastique, de préférence en silicone, qui s'engage dans le tube d'évacuation (8) dans la position fermée du clapet d'évacuation (12) de la fermeture à clapet (11).

19. Dispositif selon l'une des revendications 1 à 18, **caractérisé en ce que** l'élément de levée (13) prévu pour l'actionnement du clapet d'évacuation (12) de la fermeture à clapet (11) présente un ressort de rappel (23) agissant dans la direction de fermeture.

20. Dispositif selon l'une des revendications 1 à 19, **caractérisé en ce que** la fréquence de travail du transmetteur de vibrations est réglable, notamment dans une plage d'environ 5 Hz à 50 Hz.
